# EUROPEAN PATENT APPLICATION

(11) **EP 1 914 819 A1**
(43) Date of publication of application: **23.04.2008**
(21) Application number: 06746611.0
(22) Date of filing: 18.05.2006
(51) Int. Cl.: H01M 2/08

(54) **ALKALINE BATTERY**

(30) Priority: 15.07.2005 JP 2005206920; 02.03.2006 JP 2006056367
(71) Applicant: MATSUSHITA ELECTRIC INDUSTRIAL CO., LTD., Osaka 571-8501 (JP)
(72) Inventor: WADA, Seiji, Osaka 571-8501 (JP); SUMIHIRO, Yasushi, Osaka 571-8501 (JP); OKUBO, Takeshi, Osaka 571-8501 (JP)
(74) Representative: Haley, Stephen
(86) International application number: PCT/JP2006/309936
(87) International publication number: WO 2007/010669

(57) **Abstract**

An alkaline battery includes: a battery can (2) encasing a positive mixture (4), a separator (5) and a gel-like negative electrode (6); and a sealing assembly for fitting to an opening of the battery can (11), the sealing assembly including: a gasket (7) including an inner cylindrical portion (7a), an outer cylindrical portion (7b) that engages with an inner periphery of the opening of the battery can, a linking portion (7c) that connects the inner cylindrical portion to the outer cylindrical portion, and a thin portion (8) that is formed between the linking portion and the inner cylindrical portion, with a negative electrode collector (9) being placed through the inner cylindrical portion and through the gel-like negative electrode; and a negative electrode terminal plate (10) that is welded to a head (9a) of the negative electrode collector and has its outer edge engaging with the inside of the outer cylindrical portion of the gasket, wherein the opening of the battery can is sealed by the edge of the opening of the battery can as the edge is bent inward and axially crimped while the seal assembly is being supported by a groove (12) formed at the opening of the battery can to engage with the opening. In this alkaline battery, the linking portion of the gasket includes an annular disc (7f) that is uniform in thickness and has a two-step profile with a bent portion (7g) formed at its middle portion as viewed along the radial direction. The alkaline battery has a reduced axial dimension of the sealing portion and thus achieves improved discharge performance while retaining its safety and leakage-proof performance.

## Description

### TECHNICAL FIELD

The present invention relates to alkaline batteries, and in particular, to an alkaline battery that dispenses with the reinforcing washer used in its sealing portion. The alkaline battery has its battery volume increased by the amount corresponding to the volume of the washer and thus achieves improved discharge performance.

### BACKGROUND ART

Alkaline batteries having a construction as represented by an alkaline battery 21 in Figs. 4A and 4B are known (See, for example Patent Document 1). In Figs. 4A and 4B, a steel battery can 22 is shown as a bottomed cylinder having a positive electrode terminal 23 projecting at the bottom thereof. The battery can 22 contains a cylindrical positive mixture 24, which is composed primarily of manganese dioxide and graphite. The positive mixture 24 is placed in contact with the inner periphery of the battery can 22. A gel-like negative electrode 26, which is composed of zinc powder dispersed in a gelated electrolyte, is arranged inside the positive mixture 24 with a bottomed cylindrical separator 25 interposed therebetween.

Fitted to the opening of the battery can 22 is a gasket 27 that is placed against the open end of the separator 25 and includes an inner cylindrical portion 27a, an outer cylindrical portion 27b, and a linking portion 27c that connects the inner cylindrical portion 27a to the outer cylindrical portion 27b. The linking portion 27c of the gasket 27 is formed by a short skirt 27e that extends downward from a lower stepped portion 27d of the outer cylindrical portion 27b, forming a slightly sloped conical cylinder, and an annular disc 27f that extends radially inward and slightly upward from the lower end of the skirt 27e. Arranged between the inner periphery of the annular disc 27f and the outer periphery of the inner cylindrical portion 27a is a thin portion 28 that serves as an explosion-proof valve. A reinforcing washer 29 is arranged on the gasket 27 between the lower stepped portion 27d of the outer cylindrical portion 27b and an upper outer stepped portion 27g of the inner cylindrical portion 27a. A negative electrode collector 30 is placed through the inner cylindrical portion 27a of the gasket 27 and through the gel-like negative electrode 26. The negative electrode collector 30 includes a head 30a to which a negative electrode terminal plate 31 is secured. The outer periphery of the negative electrode terminal plate 31 is in contact with the outer periphery of the reinforcing washer 29.

A groove 32 is formed at a certain distance from the open end of the battery can 22 to support the outer periphery of the gasket 27. The open end of the battery can 22 and the upper end of the outer cylindrical portion 27b of the gasket 27 are crimped radially inward, forming a crimped portion 33. The crimped portion 33 axially compresses the upper end of the outer cylindrical portion 27b of the gasket 27, so that the gasket 27 seals the opening of the battery can 22 and secures the negative electrode terminal plate 31. The outer periphery of the battery can 22 is covered by a thermal contractive resin tube 34.

Another type of alkaline batteries includes a battery can with an enlarged opening. A seal assembly, consisting of a gasket and a terminal plate arranged within an outer cylindrical portion of the gasket, is fitted to the enlarged opening of the battery can. The gasket includes an inner cylindrical portion, the outer cylindrical portion, a linking portion, and a thin portion arranged on the outside of the inner cylindrical portion to serve as an explosion-proof valve. To seal the battery can, the edge of the opening of the battery can is crimped inward while the opening is being compressed radially. A buffering member for absorbing the compressive deformation is arranged on the inside of the outer cylindrical portion of the gasket. The buffering member serves to prevent the operation pressure of the explosion-proof valve from being affected by the stress caused to the thin portion by the compressive force that acts during radial crimping of the battery can (See, for example, Patent Document 2).

Patent Document 1: Japanese Patent Application Laid-Open No. 2000-3696

Patent Document 2: Japanese Patent Application Laid-Open No. 11-86810

### DISCLOSURE OF THE INVENTION

### PROBLEMS TO BE SOLVED BY THE INVENTION

However, since the alkaline batteries described in Patent Document 1 and having a construction shown in Figs. 4A and 4B include the reinforcing washer 29 within the gasket 27, the axial dimension of its sealing portion is increased, and, thus, the effective volume of the battery can 22 is decreased. This is a limiting factor for the improvement of the discharge performance of the batteries.

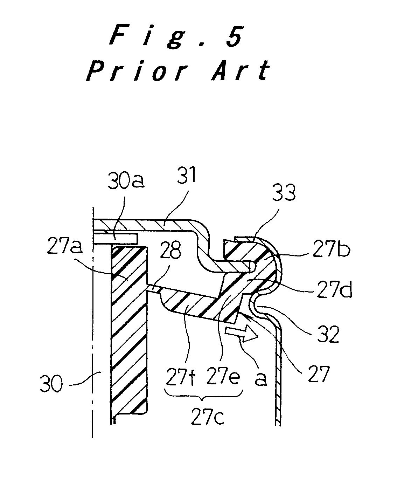

One possibility, therefore, is to construct a sealing portion without the reinforcing washer. Fig. 5 shows a sealing structure in which the reinforcing washer is simply eliminated. In this construction, however, the distortion and stress that are generated in the outer cylindrical portion 27b as the upper end of the outer cylindrical portion 27b of the gasket 27 is crimped inward and compressed axially are transmitted to the linking portion 27c, pulling the skirt 27e radially outward, as indicted by arrow a. This pulling force is directly transmitted through the annular disc 27f to the thin portion 28 formed between the annular disc 27f and the inner cylindrical portion 27a, generating a considerable stress in the thin portion 28. As a result, the thin portion 28 may crack, which results in a decrease in the leakage-proof performance of the battery or affects the operation pressure of the explosion-proof valve and, hence, reduces the reliability of the battery.

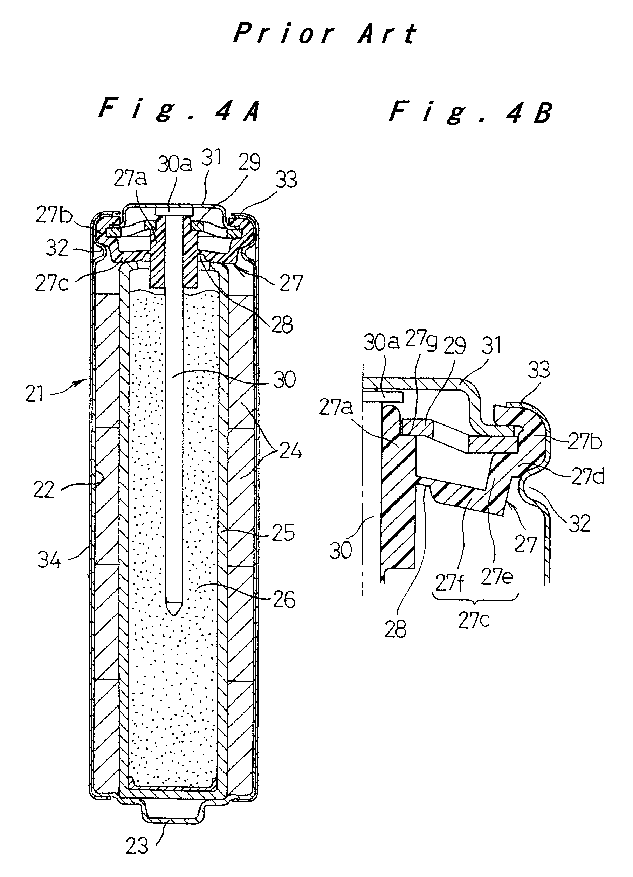

The sealing portion described in Patent Document 2 is constructed without using a metal ring (reinforcing washer). Instead, this construction includes on the inside of the outer cylindrical portion a buffering portion that has a V-shaped notch so that it can absorb the compressive deformation. This buffering member serves to keep the thin portion from being exposed to the stress caused by the compressive force that acts during radial crimping of the battery can. However, this type of alkaline battery is sealed in an essentially different way from the alkaline battery of Figs. 4A and 4B, in which the outer cylindrical portion of the gasket is compressed axially. Thus, this approach cannot be directly applied to the batteries of Fig. 4A and 4B.

In view of the above-described conventional problems, it is an object of the present invention to provide an alkaline battery that not only achieves improved discharge performance by employing a sealing portion with a decreased axial dimension, but also retains its safety and leakage-proof performance.

### MEANS FOR SOLVING THE PROBLEMS

To achieve the foregoing object, an alkaline battery of the present invention includes:
a battery can encasing a positive mixture, a separator, and a gel-like negative electrode; and
a sealing assembly for fitting to an opening of the battery can, the sealing assembly including:
   a gasket including an inner cylindrical portion, an outer cylindrical portion that engages with an inner periphery of the opening of the battery can, a linking portion that connects the inner cylindrical portion to the outer cylindrical portion, and a thin portion that is formed between the linking portion and the inner cylindrical portion, with a negative electrode collector being placed through the inner cylindrical portion and through the gel-like negative electrode; and
   a negative electrode terminal plate that is welded to a head of the negative electrode collector and has its outer edge engaging with the inside of the outer cylindrical portion of the gasket, wherein the opening of the battery can is sealed by an edge of the opening of the battery can as the edge is bent inward and axially crimped while the seal assembly is being supported by a groove formed at the opening of the battery can to engage with the opening, and wherein the linking portion of the gasket includes an annular disc that is uniform in thickness and has a two-step profile with a bent portion formed at its middle portion as viewed along a radial direction.

Since this construction does not use the reinforcing washer, the axial dimension of the sealing portion can be decreased. As a result, the discharge performance of the battery can be improved. When the end of the outer cylindrical portion of the gasket is bent inward on the sealing process of the battery, the part is axially compressed and deformed, causing distortion and stress in the outer cylindrical portion. The distortion and stress are then transmitted to the linking portion. In this construction, however, the annular disc of the linking portion, which is uniform in thickness and has a two-step profile because of the bent portion formed at its middle portion as viewed along the radial direction, effectively absorbs the distortion and stress as it deforms at the bent portion. This makes the thin portion less susceptible to significant stress and thus, to cracks, on the sealing process. As a result, the leakage-proof performance of the battery can be ensured and the operation pressure of the explosion-proof valve can be stabilized, ensuring the safety and leakage-proof performance of the battery.

With regard to the direction of the slope of the annular disc and the direction of the bending of the bent portion, the angle A1 between the outer periphery of the inner cylindrical portion of the gasket and the portion of the annular disc inside the bent portion may be 90 degrees or less and may be greater than the angle A2 between the outer periphery of the inner cylindrical portion and the portion of the annular disc outside the bent portion. In this manner, the annular disc is recessed where it contacts the open end of the separator. This is advantageous since the splitting of the gel-like negative electrode is effectively prevented.

The difference between A1 and A2 (i.e., A1 - A2) may be set in the range of 11 to 22 degrees. This is desirable since the above-described advantageous effects can be achieved in a reliable and stable manner.

The bent portion of the annular disc may be formed as an angular inflexion point. In this manner, the bent portion becomes more susceptible to stress and the annular disc is more likely to deform. As a result, the distortion and stress transmitted from the outer cylindrical portion to the annular disc on the sealing process are more effectively absorbed. Moreover, the leakage-proof performance of the battery can be even more improved and the operation pressure of the explosion-proof valve can be even more stabilized. The angular inflexion point preferably has a radius of curvature of 0.2 mm or less.

### BRIEF DESCRIPTION OF THE DRAWINGS

Figs. 1A and 1B each show an alkaline battery according to one embodiment of the present invention, with Fig. 1A being a longitudinal cross-sectional view and Fig. 1B an enlarged cross-sectional view of major components.
Fig. 2 is an enlarged view of major components of the same embodiment in which the bent portion of the annular disc of the gasket has an angular shape.
Fig. 3 shows cross-sectional views of major components of Comparative Examples 1 and 2 and Examples 1 through 8.
Figs. 4A and 4B each show a conventional alkaline battery with Fig. 4A being a longitudinal cross-sectional view and Fig. 4B an enlarged cross-sectional view of major components.
Fig. 5 is an enlarged cross-sectional view of major components in which the reinforcing washer used in conventional alkaline batteries has been eliminated.

### BEST MODE FOR CARRYING OUT THE INVENTION

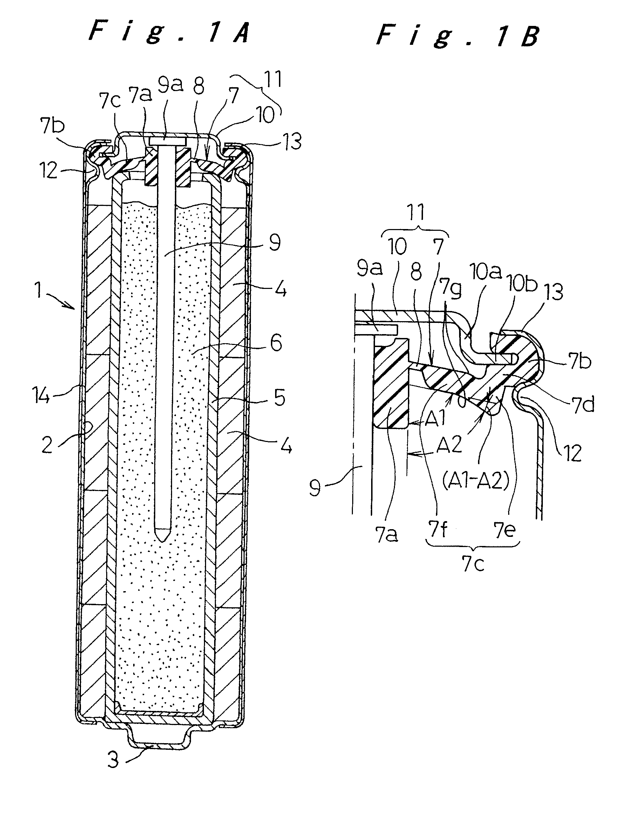

An alkaline battery in one embodiment of the present invention will now be described with reference to Figs. 1A and 1B.

In Figs. 1A and 1B, an alkaline battery denoted by reference numeral 1 includes a steel battery can 2 that is a bottomed cylinder having a positive electrode terminal 3 projecting at the bottom thereof. The battery can 2 contains a cylindrical positive mixture 4, which is composed primarily of manganese dioxide and graphite. The positive mixture 4 is placed in contact with the inner periphery of the battery can 2. A gel-like negative electrode 6, which is composed of zinc powder dispersed in a gelated electrolyte, and is arranged inside the positive mixture 4 with a bottomed cylindrical separator 5 interposed therebetween. Fitted to the opening of the battery can 2 is a gasket 7 that is placed against the open end of the separator 5 and includes an inner cylindrical portion 7a, an outer cylindrical portion 7b, and a linking portion 7c that connects the inner cylindrical portion 7a to the outer cylindrical portion 7b. Arranged between the inner periphery of the linking portion 7c and the outer periphery of the inner cylindrical portion 7a is a thin portion 8 that serves as an explosion-proof valve. A negative electrode collector 9 is placed through the inner cylindrical portion 7a of the gasket 7 and through the gel-like negative electrode 6. The negative electrode collector 9 includes a head 9a to which a negative electrode terminal plate 10 is secured. A flange 10b is formed at the outer periphery of the negative electrode terminal plate 10 with a short vertical cylindrical portion 10a formed in between. The outer periphery of the flange 10b engages with the inner periphery of the outer cylindrical portion 7b of the gasket 7. In this manner, the gasket 7 and the negative electrode terminal plate 10 form a seal assembly 11.

A groove 12 is formed at a certain distance from the open end of the battery can 2 to support the outer periphery of the seal assembly 11, or the lower end of the outer cylindrical portion 7b of the gasket 7. In this state, the open end of the battery can 2 and the upper end of the outer cylindrical portion 7b of the gasket 7 are crimped radially inward, forming a crimped portion 13. The crimped portion 13 axially compresses the upper end of the outer cylindrical portion 7b of the gasket 7, so that the seal assembly 11 including the gasket 7 and the negative electrode terminal plate 10 seals the opening of the battery can 2 and secures the negative electrode terminal plate 10. The outer periphery of the battery can 2 is covered by a thermal contractive resin tube 14.

In the alkaline battery 1 having the above-described construction, the linking portion 7c of the gasket 7 is formed by a short skirt 7e that extends downward from a stepped portion 7d at the lower inner periphery of the outer cylindrical portion 7b, forming a slightly sloped conical cylinder, and an annular disc 7f that extends radially inward and slightly upward from the lower end of the skirt 7e, as detailed in Fig. 1B. The annular disc 7f is uniform in thickness and has a two-step profile with a bent portion 7g formed at its middle portion as viewed along the radial direction. Assuming that the angle between the outer periphery of the inner cylindrical portion 7a of the gasket 7 and the portion of the annular disc 7f inside the bent portion 7g is A1 and that the angle between the outer periphery of the inner cylindrical portion 7a of the gasket 7 and the portion of the annular disc 7f outside the bent portion 7g is A2, A1 is an angle smaller or equal to 90 degrees and the difference between A1 and A2 (i.e., A1 - A2) is set in the range of 11 to 22 degrees.

When the end of the outer cylindrical portion 7b of the gasket 7 is bent inward on the sealing process of the battery, the part is axially compressed and deformed, causing distortion and stress in the outer cylindrical portion 7b. The distortion and stress are then transmitted to the linking portion 7b, pulling the skirt 7e radially outward with a significant force. In this construction, however, the annular disc 7f of the linking portion 7c, which is uniform in thickness and has a two-step profile because of the bent portion 7g formed at its middle portion as viewed along the radial direction, effectively absorbs the distortion and stress as it deforms at the bent portion 7g. This keeps the thin portion 8 from being exposed to significant stress during the sealing process. As a result, the leakage-proof performance of the battery can be ensured and the operation pressure of the explosion-proof valve can be stabilized, ensuring the safety and leakage-proof performance of the battery. Furthermore, eliminating the reinforcing washer from the seal assembly 11 makes it possible to design the sealing portion with a decreased axial dimension. As a result, the effective volume of the battery can 2 can be increased and, thus, the discharge performance of the battery can be improved.

With regard to the direction of the slope of the annular disc 7f and the direction of the bending of the bent portion 7g, the angle A1 between the outer periphery of the inner cylindrical portion 7a and the portion of the annular disc 7f inside the bent portion 7g may be an obtuse angle, or the angle A2 between the outer periphery of the inner cylindrical portion 7a and the portion of the annular disc 7f outside the bent portion 7g may be larger than A1. However, when A1 is smaller or equal to 90 degrees and A2 is smaller than A1, the annular disc 7f is recessed where it contacts the open end of the separator 5. This is advantageous since the splitting of the gel-like negative electrode 6 is effectively prevented. This advantageous effect becomes even more significant when the difference between A1 and A2 (i.e., A1 - A2) is set in the range of 11 to 22 degrees.

More advantageously, the bent portion 7g of the annular disc 7f on the interior of the battery can may be formed as an angular inflexion point with a radius of curvature (R) of 0.2 mm or less. The bent portion 7g formed as an angular inflexion point is more susceptible to stress and, thus, more likely to deform, so that the distortion and stress transmitted from the outer cylindrical portion 7b to the annular disc 7f on the sealing process are more effectively absorbed. As a result, the leakage-proof performance of the battery can be even more improved and the operation pressure of the explosion-proof valve can be even more stabilized.

### (Examples)

Examples of the present invention will now be described in comparison with conventional examples as Comparative Examples.

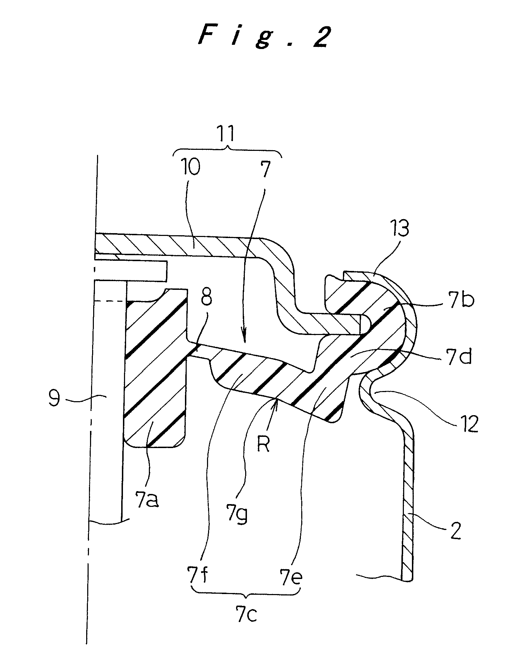

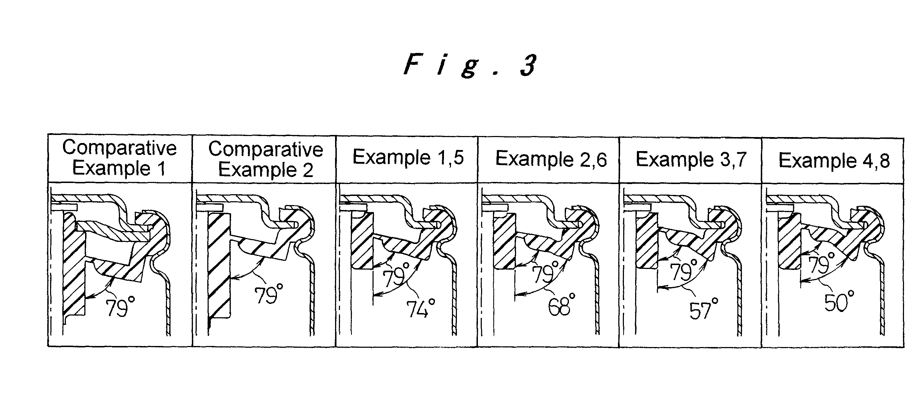

As shown in Fig. 3, the following alkaline batteries were prepared:
a conventional alkaline battery as shown in Figs. 4A and 4B (Comparative Example 1);
an alkaline battery as shown in Fig. 5 (Comparative Example 2);
an alkaline battery 1 as shown in Figs. 1A and 1B with the angles A1 and A2 being 79 degrees and 74 degrees, respectively (Example 1);
an alkaline battery 1 as shown in Figs. 1A and 1B with the angles A1 and A2 being 79 degrees and 68 degrees, respectively (Example 2);
an alkaline battery 1 as shown in Figs. 1A and 1B with the angles A1 and A2 being 79 degrees and 57 degrees, respectively (Example 3);
an alkaline battery 1 as shown in Figs. 1A and 1B with the angles A1 and A2 being 79 degrees and 50 degrees, respectively (Example 4);
an alkaline battery having the same construction as Example 1, except that the bent portion has an angular shape as shown in Fig. 2 (Example 5);
an alkaline battery having the same construction as Example 2, except that the bent portion has an angular shape as shown in Fig. 2 (Example 6);
an alkaline battery having the same construction as Example 3, except that the bent portion has an angular shape as shown in Fig. 2 (Example 7); and
an alkaline battery having the same construction as Example 4, except that the bent portion has an angular shape as shown in Fig. 2 (Example 8).

The alkaline batteries of Comparative Examples 1 and 2 and Examples 1 through 8 were tested as follows. Leakage-proof performance:
100 batteries of each example were subjected to each of the following test procedures over a 1-to 4-month period. The number of batteries that showed leakage was counted at the end of each month.

1) Heat shock by alternately storing at 80°C for 12 hours, then at -20°C for 12 hours.
2) Stored at 80°C.

### Discharge performance:

The batteries were subjected to each of the following test procedures. The discharge performance was rated relative to Comparative Example 1 (= 100).
1) Discharge at 1000 mA by 10 spm/1hpd (i.e., 1-hour discharge each day. Every 1 minute pulsed-discharge consisted of a 10sec discharging at 1000 mA and a 50sec off)
2) Continuous discharge at 1000 mA.
3) Continuous discharge at 100 mA.

### Safety test:

20 sets of each example were subjected to each of the following test procedures. The number of exploded batteries was counted.
1) Single battery in series short-circuit test (Single battery was short-circuited at room temperature).
2) Four batteries in series short-circuit test (Four batteries connected in series were short-circuited at room temperature) .
3) 1/4 reverse connection short-circuit test (one of the four batteries connected in series was reversed and the batteries were short-circuited at room temperature).

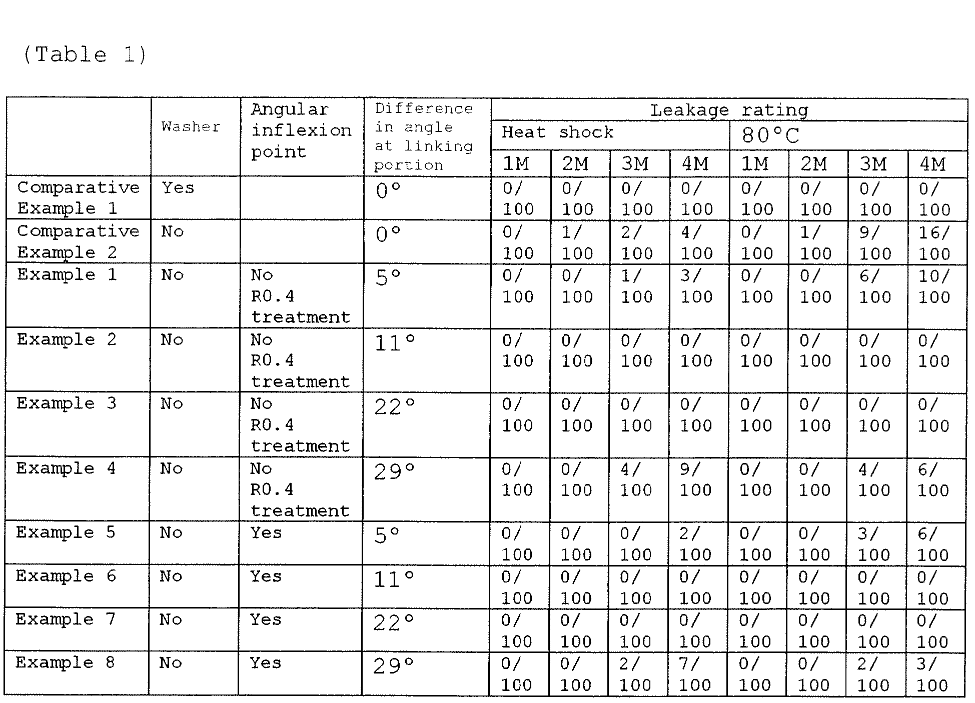

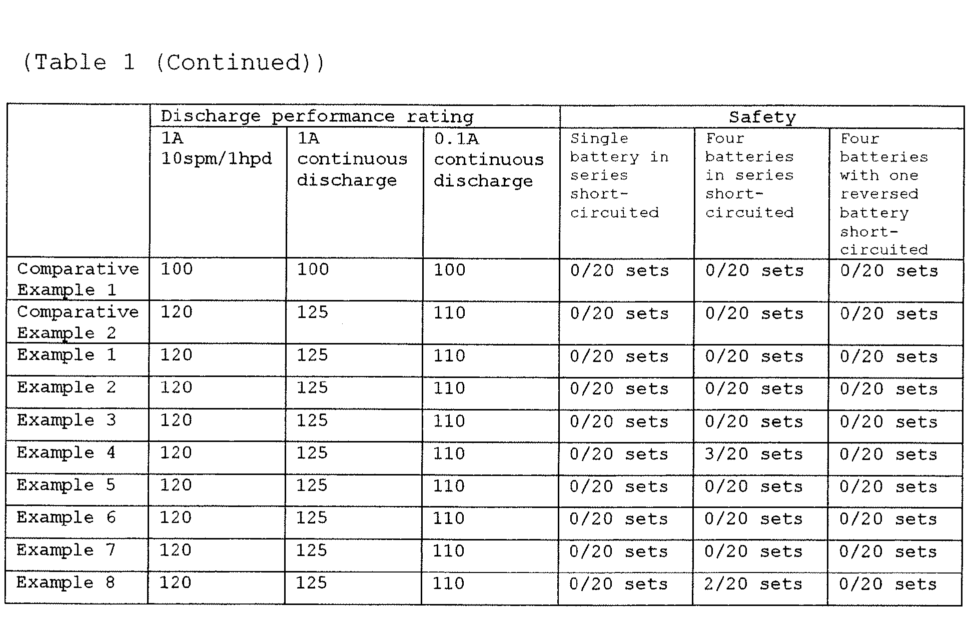

The results of the leakage-proof performance test, the discharge performance test, and the safety test were shown for Comparative Examples 1 and 2 and Examples 1 through 8 in Table 1.

The results of Table 1 indicate that the discharge performance is increased by 10 to 25% in each of Comparative Example 2 and Examples 1 through 8 without reinforcing washer as compared to Comparative Example 1 with reinforcing washer. The leakage rating is favorable in each of Examples 1 through 8 with bent portion as compared to Comparative Example 2 without bent portion, or bent angle = 0 degree. However, Examples 4 and 8, in which the difference between the two angles is excessively large, show unfavorable results in both the leakage rating and the safety rating. The improvement in the leakage rating is less significant when the difference between the two angles is relatively small as in Examples 1 and 5. In each of Examples 2, 3, 6 and 7, in which the difference between the two angles is in the range of 11 to 22 degrees, the results are as favorable as in Conventional Example with reinforcing washer both in the leakage rating and the safety rating. Examples 5 through 8, in particular Examples 5 and 8, in which the bent portion is formed into an angular shape, show significant improvement both in the leakage rating and the safety rating as compared to Examples 1 through 4, in particular Example 1 and 4, in which the bent portion has a radius of curvature (R) of 0.4 mm and is not formed as an angular shape.

### INDUSTRIAL APPLICABILITY

In the above-describe alkaline battery of the present invention, the linking portion of the gasket includes an annular disc that is uniform in thickness and has a two-step profile with a bent portion formed at its middle portion as viewed along the radial direction. By deforming itself at its bent portion, the annular disc effectively absorbs the distortion and stress generated in the outer cylindrical portion on the sealing process of the battery. This keeps the thin portion from being exposed to significant stress. In this manner, the leakage-proof performance of the battery can be ensured and the operation pressure of the explosion-proof valve can be stabilized, ensuring the safety and leakage-proof performance of the battery. In addition, eliminating the reinforcing washer makes it possible to design a sealing with a decreased axial dimension. This improves the discharge performance of the battery.

## Claims

1. An alkaline battery comprising:
a battery can (2) encasing a positive mixture (4), a separator (5), and a gel-like negative electrode (6); and
a sealing assembly for fitting to an opening of the battery can (11), the sealing assembly comprising:
a gasket (7) including an inner cylindrical portion (7a), an outer cylindrical portion (7b) that engages with an inner periphery of the opening of the battery can, a linking portion (7c) that connects the inner cylindrical portion to the outer cylindrical portion, and a thin portion (8) that is formed between the linking portion and the inner cylindrical portion, with a negative electrode collector (9) being placed through the inner cylindrical portion and through the gel-like negative electrode; and
a negative electrode terminal plate (10) that is welded to a head (9a) of the negative electrode collector and has its outer edge engaging with the inside of the outer cylindrical portion of the gasket, wherein the opening of the battery can is sealed by the edge of the opening of the battery can as the edge is bent inward and axially crimped while the seal assembly is being supported by a groove (12) formed at the opening of the battery can to engage with the opening, and wherein the linking portion of the gasket includes an annular disc (7f) that is uniform in thickness and has a two-step profile with a bent portion (7g) formed at its middle portion as viewed along the radial direction.

2. The alkaline battery according to claim 1, wherein, given that an angle between an outer periphery of the inner cylindrical portion (7a) of the gasket (7) and a portion of the annular disc (7f) inside the bent portion (7g) is A1, and that an angle between an outer periphery of the inner cylindrical portion of the gasket and a portion of the annular disc outside the bent portion is A2, A1 is greater than A2 and is an angle smaller or equal to 90 degrees.

3. The alkaline battery according to claim 2, wherein a difference between A1 and A2 (A1 - A2) is set in a range of 11 to 22 degrees.

4. The alkaline battery according to any one of claims 1 to 3, wherein the bent portion (7g) of the annular disc (7f) is formed as an angular inflexion point.
